# EUROPÄISCHE PATENTSCHRIFT

(11) **EP 1 817 679 B1**
(45) Veröffentlichungstag und Bekanntmachung des Hinweises auf die Patenterteilung: **04.11.2009**
(21) Anmeldenummer: 05810768.1
(22) Anmeldetag: 25.11.2005
(51) Int. Cl.: G06F 13/42, G05B 19/042, G09G 3/32

(54) **ELEKTRONISCHES STEUERUNGSSYSTEM FÜR DIE AUTOMATISIERUNGSTECHNIK**
ELECTRONIC CONTROL SYSTEM FOR USE IN AUTOMATION TECHNOLOGY
SYSTEME DE COMMANDE ELECTRONIQUE UTILISE EN TECHNIQUE D'AUTOMATISATION

(30) Priorität: 26.11.2004 DE 102004057286
(43) Veröffentlichungstag der Anmeldung: 15.08.2007
(73) Patentinhaber: Hasberg, Günter, 58454 Witten (DE)
(72) Erfinder: Hasberg, Günter, 58454 Witten (DE)
(74) Vertreter: Isfort, Olaf
(86) Internationale Anmeldenummer: PCT/EP2005/012627
(87) Internationale Veröffentlichungsnummer: WO 2006/056457

(56) Entgegenhaltungen:
- EP-A- 0 586 715
- CH-A5- 683 806
- DE-A1- 19 748 293
- GB-A- 1 273 667
- GB-A- 2 080 000
- US-A- 4 139 149

## Beschreibung

Die Erfindung betrifft ein elektronisches Steuerungssystem, insbesondere für die Automatisierungstechnik, mit einer Prozessoreinheit zur Verarbeitung von gespeicherten Programmdaten, und wenigstens einem von der Prozessoreinheit separaten Ein-/Ausgabemodul zur Erfassung bzw. zur Erzeugung von elektrischen Prozesssignalen, wobei die Prozessoreinheit über einen digitalen Datenbus mit dem Ein-/Ausgabemodul verbunden ist.

In der Automatisierungstechnik dienen derartige Steuerungssysteme, die auch als speicherprogrammierbare Steuerungen (SPS) bezeichnet werden, zur Automatisierung von technischen Prozessen verschiedenster Art. Die Ein-/Ausgabemodule bilden gleichsam die Peripherie der bekannten Steuerungssysteme, wobei die Ein-/Ausgabemodule dazu dienen, in Prozessabläufen Eingabesignale zu erfassen und Ausgabesignale zu erzeugen. Hierzu werden üblicherweise geeignete Sensoren bzw. Aktoren verwendet, die mit den Ein-/Ausgabemodulen verbunden sind. Die Signalübertragung zwischen den Ein-/Ausgabemodulen zu der zentralen Prozessoreinheit erfolgt bei den bekannten Steuerungssystemen über einen geeigneten digitalen Datenbus. Die zentrale Prozessoreinheit verarbeitet auf der Grundlage von gespeicherten Programmdaten die über den Datenbus eingehenden Prozesssignale und generiert entsprechende Ausgabesignale, beispielsweise zur Steuerung von Regelgrößen Innerhalb eines automatisierten technischen Prozesses. Aufgrund der Programmierbarkeit der zentralen Prozessoreinheit sind derartige elektronische Steuerungssysteme extrem flexibel einsetzbar. Besonders vorteilhaft ist dabei, dass sich die Ein-/Ausgabemodule zur Datenerfassung bzw. zur Steuerung unmittelbar bei den entsprechenden Sensoren bzw. Aktoren des jeweils zu automatisierenden Prozesses angeordnet sein können. Über den Datenbus werden die Ein-/Ausgabesignale in der zentralen Prozessoreinheit zusammengeführt bzw. von dieser zu den entsprechenden Modulen verteilt. Aufgrund der Verwendung des Datenbusses entfällt somit eine aufwendige Verdrahtung mittels individueller Signalleitungen zwischen der Steuerungszentrale und den einzelnen Sensoren bzw. Aktoren.

Bei den bekannten Steuerungssystemen kommt üblicherweise ein Datenbus nach einem der bekannten Standards zum Einsatz. Zu nennen sind der CAN-Bus, der LON-Bus, der Profibus, der Foundation Fieldbus oder auch aus dem EDV-Bereich bekannte Datenbusse, wie USB oder Ethernet. Nachteiligerweise benötigen die Ein-/Ausgabemodule von bekannten Steuerungssystemen, die mit einem Datenbus nach einem der vorgenannten Standards arbeiten, eine relativ komplexe Mikroprozessorsteuerung mit entsprechender in dem jeweiligen Modul implementierter Software zur Datenkommunikation über den Datenbus. Allein um die benötigte Schnittstelle zu dem Datenbus bereitzustellen, muss daher oft ein wesentlich größerer technischer Aufwand betrieben werden als für die eigentliche Ein- oder Ausgabefunktionalität des jeweiligen Moduls erforderlich ist. Dies führt dazu, dass bei bekannten Steuerungssystemen die einzelnen peripheren Module teuer sind, selbst wenn diese nur vergleichsweise triviale Aufgaben innerhalb des zu automatisierenden Prozesses zu verrichten haben. Nachteilig ist bei den digitalen Datenbussen der bekannten Steuerungssysteme weiterhin, dass diese zur Datenübertragung ein komplexes Datenübertragungsprotokoll verwenden, das die Datenübergabe zwischen der zentralen Prozessoreinheit und den peripheren Modulen sowie auch die Adressierung der einzelnen Module innerhalb des Steuerungssystems kontrolliert. Aufgrund der aufwendigen Datenübertragungsprotokolle ist bei bekannten Steuerungssystemen nachteiligerweise nur ein Teil der insgesamt verfügbaren Übertragungsbandbreite für die eigentliche Datenübertragung nutzbar. Besonders nachteilig ist dabei, dass die Übertragungsprotokolle der bekannten Busstandards es nicht erlauben, beispielsweise zum Zwecke der Störungsanalyse innerhalb eines zu automatisierenden Prozesses, synchron zeitkritische Prozesssignalimpulse mit einer Zeitauflösung im Sub-Millisekundenbereich über verschiedene räumlich entfernte Eingabemodule zu erfassen und zentral auszuwerten. Bekannte Datenbusstandards, die mit einer hohen Datenübertragungsrate arbeiten, haben den Nachteil, dass die maximal mögliche Datenübertragungsstrecke oft nicht ausreichend ist. Nachteilig ist außerdem der oft erhebliche Verdrahtungsaufwand bei den Datenbusstandards bekannter Steuerungssysteme.

Eine andere Ausgestaltung von Steuerungssystemen ist beispielsweise aus der schweizerischen Patentschrift CH 683 806 85 bekannt. Bei diesem System werden Daten seriell über einen Datenbus von einer zentralen Steuerung an Peripherieeinheiten übermittelt. Die Verarbeitung dieser Daten durch die einzelnen Peripherieeinheiten wird über Taktsignale gesteuert, die die zentrale Steuerung über eine Taktleitung an die Peripherieeinheiten ausgibt. Diese Ausgestaltung eines Steuerungssystems bringt den Vorteil, dass komplexe Datenübertragungsprotokolle entfallen können. Bei dem Steuerungssystem dieser Druckschrift können die einzelnen Peripherieeinheiten auch Daten an die zentrale Steuerung senden, um bestimmte Systemparameter zu erfassen. Nachteilig ist, dass die Abgabe der Daten von den Peripherieeinheiten an die zentrale Steuerung nicht in irgendeiner Weise gesteuert wird, so dass wiederum das Problem auftritt, dass komplexe Datenübertragungsprotokolle verwendet werden müssen, um Adressierungsprobleme zu vermeiden. Zur Erzeugung und Verarbeitung dieser Datenübertragungsprotokolle sind jedoch zumindest teure periphere Module notwendig.

Vor diesem Hintergrund ist es Aufgabe der Erfindung, ein elektronisches Steuerungssystem bereitzustellen, bei dem die zuvor genannten Nachteile vermieden werden und welches sowohl hinsichtlich der Datenausgabe als auch bezüglich einer Zustandserfassung des Systems höchst zuverlässig arbeitet. Insbesondere sollen die Ein-/Ausgabemodule des Steuerungssystems kompakt, technisch einfach, zuverlässig und preiswert sein. Auf komplexe Bauteile, insbesondere auf Mikroprozessoren für die Kommunikation über den Datenbus, soll bei den Ein-/Ausgabemodulen verzichtet werden. Außerdem soll zur Datenübertragung über den Datenbus kein besonderes Datenübertragungsprotokoll erforderlich sein, damit eine hohe Datenübertragungsrate bei gleichzeitig einfachster Handhabbarkeit des Systems insgesamt gewährleistet ist.

Diese Aufgabe löst die Erfindung ausgehend von einem elektronischen Steuerungssystem der eingangs genannten Art dadurch, dass der Datenbus zwei separate Taktleitungen, nämlich eine Eingabetaktleitung und eine Ausgabetaktleitung, sowie zwei separate Datenleitungen, nämlich eine Eingabedatenleitung und eine Ausgabedatenleitung, umfasst, wobei das Ein-/Ausgabemodul ein von den Taktsignalen gesteuertes Schieberegister aufweist, dessen Datenausgang und/oder -eingang mit den Datenleitungen verbunden ist.

Durch somit nur vier unabhängige Leitungen kann ein Eingabekanal und ein davon unabhängiger Ausgabekanal für die Prozesssignale realisiert werden. Über die Eingabedatenleitung werden die von den entsprechenden Modulen erfassten Eingabedaten an die zentrale Prozessoreinheit übertragen. Über die Ausgabeleitung werden die auszugebenden Prozesssignale von der Prozessoreinheit an die entsprechenden Module über den digitalen Datenbus verteilt. Die Steuerung der Datenausgabe und der Dateneingabe erfolgt dabei unabhängig voneinander mittels separater Taktsignale. Unterschiedliche Taktfrequenzen für die Datenein- bzw. -ausgabe sind möglich. Die Datenkommunikation wird zweckmäßigerweise von der Prozessoreinheit gesteuert, indem die Prozessoreinheit zur Erzeugung eines Ausgabetaktsignals auf der Ausgabetaktleitung und eines davon unabhängigen Eingabetaktsignals auf der Eingabetaktleitung eingerichtet ist. Es hat sich gezeigt, dass insbesondere bei langen Übertragungsstrecken es aufgrund der Signallaufzeiten zweckmäßig ist, bei dem erfindungsgemäßen System auf der Eingabetaktleitung ein Taktsignal reduzierter Frequenz zu verwenden, um Fehlfunktionen auszuschließen.

Dabei basiert die Funktionsweise des Datenbusses darauf, dass jedes Ein-/Ausgabemodul ein oder mehrere ein- oder mehrstufige Schieberegister aufweist, die mittels der über die Taktleitungen übertragenen Taktsignale gesteuert werden. Dabei entspricht die Anzahl der Schieberegister jedes Ein-/Ausgabemoduls der Anzahl der Datenbits, die für die jeweils zu erfassenden oder zu erzeugenden Prozesssignale benötigt werden. Dies ermöglicht eine besonders einfache serielle Datenübertragung über den Datenbus, die ohne jegliches Datenübertragungsprotokoll auskommt. Zur Datenkommunikation werden mithin nur einfachste Logikbausteine benötigt, was dazu führt, dass die Ein-/Ausgabemodule des erfindungsgemäßen Steuerungssystems extrem preiswert herstellbar sind. Auch der Verdrahtungsaufwand für den digitalen Datenbus ist minimal, da lediglich für die Taktleitungen und für die Datenleitungen ein geeignetes Kabel erforderlich ist. Somit können unter Verwendung einfacher und preiswerter Kabel auch größere Entfernungen zwischen der zentralen Prozessoreinheit und den peripheren Ein-/Ausgabemodulen problemlos überbrückt werden.

Sinnvollerweise weist die Prozessoreinheit des erfindungsgemäßen Steuerungssystems eine Datenschnittstelle zur Verbindung mit einem Computer auf. Über die Schnittstelle, bei der es sich beispielsweise um eine serielle Schnittstelle nach einem üblichen Standard (RS232) handeln kann, werden die von der Prozessoreinheit zu verarbeitenden Programmdaten in den Speicher der Prozessoreinheit geladen. Die Programmierung der Prozessoreinheit kann somit auf einem herkömmlichen PC erfolgen. Ebenso können über die Datenschnittstelle von der Prozessoreinheit des Steuerungssystems erfasste und gespeicherte Prozesssignale in den PC eingelesen werden, um beispielsweise mittels des PCs eine weitere Auswertung dieser Daten vorzunehmen.

Wenn der Datenbus des erfindungsgemäßen Steuerungssystems in der oben angesprochenen Weise als Kabelverbindung ausgebildet ist, ist es zweckmäßig, jeder Takt- und Datenleitung jeweils ein verdrilltes Adernpaar der Kabelverbindung zuzuordnen. Für den Datenbus kann demgemäß ein handelsübliches "Twisted Pair"-Kabel benutzt werden. Ein derartiges Kabel, wie es beispielsweise auch als Netzwerkkabel in Computernetzwerken zum Einsatz kommt, ist besonders preiswert, was von Vorteil ist, wenn längere Datenübertragungsstrecken zwischen den peripheren Ein-/Ausgabemodulen und der zentralen Prozessoreinheit überbrückt werden müssen. Außerdem lassen sich mit den bekannten "Twisted Pair"-Kabeln hohe Datenübertragungsgeschwindigkeiten erzielen. Bitraten im MHz-Bereich sind mit derartigen Kabeiverbindungen kein Problem. Ein übliches 8-adriges, geschirmtes RJ45-Kabel kann für den Datenbus des erfindungsgemäßen Systems verwendet werden. Dabei wird zweckmäßigerweise jeweils ein verdrilltes Adernpaar für die Eingabetaktleitung, die Ausgabetaktleitung, die Eingabedatenleitung und die Ausgabedatenleitung verwendet. Über die einzelnen Adernpaare erfolgt die Signalübertragung jeweils symmetrisch (differenziell).

Die Funktionsweise des erfindungsgemäßen Datenbusses basiert, wie oben bereits angesprochen, auf mittels der Taktsignale gesteuerten Schieberegistern. Dabei kann jedes Ein-/Ausgabemodul des Systems zwei oder mehr ein- oder mehrstufige Schieberegister aufweisen, wobei die Schieberegister jeweils über ihre Datenein- bzw. -ausgänge in Serie miteinander verbunden sind. Dadurch wird eine serielle Datenübertragung über den Datenbus von Schieberegister zu Schieberegister realisiert. Jedes der Ein-/Ausgabemodule kann zweckmäßigerweise einen Buseingangsanschluss und einen Busausgangsanschluss umfassen, und zwar derart, dass eine Mehrzahl von Ein-/Ausgabemodulen über den Datenbus in Serie miteinander verbindbar sind. Im Ergebnis sind dann sämtliche Schieberegister des Systems über die Datenleitung des Datenbusses in Serie geschaltet. Dies hat den Vorteil, dass der Bus insgesamt für den Eingabekanal und den Ausgabekanal jeweils nur eine Datenleitung benötigt. Außerdem ist das System durch die Aneinanderreihung von Ein-/Ausgabemodulen beliebig erweiterbar.

Wesentlich ist, dass, wie oben bereits angesprochen, bei dem erfindungsgemäßen System jedes Schieberegister, das mit dem Datenbus verbunden ist, einem Datenbit der zu erfassenden bzw. zu erzeugenden elektrischen Prozesssignale zugeordnet ist. Demzufolge ist für die Datenübertragung über den digitalen Datenbus des erfindungsgemäßen Systems kein besonderes Datenübertragungsprotokoll erforderlich. Erforderlich ist allerdings, dass die Prozessoreinheit - durch Bereitstellung entsprechender Programmdaten - gemäß der Zahl und der Funktion der über den Datenbus in Serie miteinander verbundenen Ein-/Ausgabemodule konfiguriert wird. Die Konfiguration des Steuerungssystems kann zweckmäßigerweise mittels des mit der Prozessoreinheit über deren Datenschnittstelle verbindbaren PCs erfolgen. Über den PC kann ein Benutzer des Systems eingeben, welche Ein-/Ausgabemodule in welcher Reihenfolge an die Prozessoreinheit über den Datenbus angeschlossen sind und welche Funktion die einzelnen Module haben. Diese Konfiguration definiert eine Zykluslänge, nämlich eine bestimmte Anzahl von Ausgabe- bzw. Eingabetakten, die erforderlich ist, um einen vollständigen Datensatz zwischen der Prozessoreinheit und allen Modulen des Systems zu übertragen.

Wenn mehrere Ein-/Ausgabemodule in der zuvor beschriebenen Weise über den Datenbus in Serie miteinander verbunden sind, ist es zweckmäßig, wenn die Ein-/Ausgabemodule eine zwischen den Buseingangsanschluss und den Busausgangsanschluss geschaltete Taktaufbereitungsschaltung zur Wiederherstellung der Signalform des Taktsignals aufweisen. Das Taktsignal wird von der an einem Ende des Datenbusses angeschlossenen zentralen Prozessoreinheit generiert und dann von Modul zu Modul weitergegeben. Dabei kommt es zwangsläufig zu Verzerrungen des Taktsignals. In der Praxis hat sich gezeigt, dass die einzelnen Taktimpulse von Modul zu Modul verkürzt werden. Dies führt dazu, dass eine zuverlässige Funktion des Systems nicht mehr gewährleistet ist, wenn mehr als fünf oder sechs Module über den Datenbus in Serie miteinander verbunden werden. Hier schafft die Taktaufbereitungsschaltung Abhilfe, die dafür sorgt, dass die ursprüngliche Signalform des Taktsignals wieder hergestellt wird. Wenn zumindest einige der Module des Systems mit einer derartigen Taktaufbereitungsschaltung ausgestattet sind, ist die Gesamtzahl der in Serie miteinander verbindbaren Module praktisch unbegrenzt.

Gemäß einer bevorzugten Ausgestaltung des erfindungsgemäßen Steuerungssystems weisen die Ein-/Ausgabemodule eine Taktdetektionsschaltung auf, die derart ausgebildet ist, dass im Falle einer Unterbrechung des Taktsignals für die Dauer eines vorgebbaren Zeitintervalls entweder die digitalen Daten aus dem Schieberegister in einen Speicher des betreffenden Ein-/Ausgabemoduls geladen oder die Daten aus dem Speicher in das Schieberegister übertragen werden. Wie oben angesprochen, ist durch die Zahl der über den Datenbus miteinander verbundenen Schieberegister eine Zykluslänge definiert. Nach einer bestimmten Zahl von Takten sind die über den Datenbus seriell von Schieberegister zu Schieberegister weitergereichten Datenbits in das gewünschte Register gelangt. Die vollständige Datenübertragung kann den Modulen des Steuerungssystems dann dadurch signalisiert werden, dass das entsprechende Taktsignal unterbrochen wird. Somit kennzeichnet die Unterbrechung des Taktsignals jeweils das Ende eines Übertragungszyklus. Die Taktdetektionsschaltung registriert die Unterbrechung des Taktsignals, wenn diese Unterbrechung eine gewisse Mindestdauer hat, und übernimmt so nach dem Ende jedes Übertragungszyklus die Daten aus dem Schieberegister in einen entsprechenden Speicher, wo die Daten bis zum Ende des nächsten Übertragungszyklus unverändert bleiben. Gemäß dem zuvor beschriebenen Vorgehen wird durch die Prozessoreinheit des erfindungsgemäßen Systems das Taktsignal gezielt für eine bestimmt Zeit unterbrochen, um den einzelnen Modulen das Ende jeweils eines Übertragungszyklus anzuzeigen. Diese Technik erlaubt es vorteilhafterweise, auch von räumlich entfernten Modulen Eingangssignale mit hoher Zeitauflösung synchron zu erfassen. Die so gespeicherten Daten steuern dann die von dem jeweiligen Modul zu erzeugenden Prozesssignale. Andererseits kann die Taktdetektionsschaltung dazu genutzt werden, nach jedem Zyklusende die in dem Speicher des betreffenden Moduls abgelegten Eingabedaten in das Schieberegister zu übertragen, damit die erfassten Daten während des nächsten Taktzyklus über den Datenbus an die zentrale Prozessoreinheit übermittelt werden können.

Fehler bei der Datenübertragung über den Datenbus des erfindungsgemäßen Steuerungssystems können nicht ausgeschlossen werden. Es ist daher zweckmäßig, wenn die Prozessoreinheit derart eingerichtet ist, dass diese Ausgabedaten an die Ausgabemodule über den Datenbus periodisch mit einer vorgegebenen Wiederholungsfrequenz überträgt, auch wenn sich die Ausgabedaten zwischen den Ausgabezyklen nicht ändern. Selbst wenn bei der Übertragung von Ausgabedaten Fehler auftreten, so werden diese Fehler mit hoher Wahrscheinlichkeit bei der nächsten Datenübertragung korrigiert. Zur weiteren Erhöhung der Fehlersicherheit bei der Datenübertragung können die Module des erfindungsgemäßen Systems mit einer Prüflogikschaltung ausgestattet werden, durch welche die Übertragung von Daten nach dem Ende eines Übertragungszyklus aus dem Schieberegister in den Speicher des Moduls in Abhängigkeit vom Ergebnis eines Vergleichs mit vorgegebenen Prüfdaten erfolgt. Somit werden die Daten aus dem Schieberegister in den Speicher des Moduls nur übernommen, wenn die in dem Modul gespeicherten Prüfdaten mit entsprechenden von der Prozessoreinheit über den Datenbus übertragenen Daten übereinstimmen.

Weiterhin ist es zweckmäßig, wenn bei dem erfindungsgemäßen Steuerungssystem die Prozessoreinheit derart eingerichtet ist, dass diese Eingabedaten von Eingabemodulen über den Datenbus periodisch abfragt, wobei die Eingabedaten eines Eingabemoduls erst als gültig erkannt werden, wenn sich diese während einer vorgebbaren Zahl von Abfragezyklen nicht ändern. Hierdurch wird verhindert, dass kurzzeitige Störimpulse an den Eingängen der entsprechenden Module fälschlich als gültige Eingabedaten gewertet werden. Die Zahl von Abfragezyklen, während derer das erfasste Signal unverändert bleiben muss, um als gültiges Prozesssignal registriert zu werden, definiert eine Prellzeit, die je nach Bedarf individuell für jedes Eingabemodul gewählt werden kann.

Gemäß einer besonders praktischen Ausführungsform des erfindungsgemäßen Steuerungssystems besteht wenigstens ein Ein-/Ausgabemodul aus separaten, über Steckverbindungen miteinander verbindbaren Komponenten, nämlich zumindest aus einer Buseingangskomponente mit Buseingangsanschluss zur Verbindung mit dem Datenbus, einer Spannungsversorgungskomponente zur Spannungsversorgung des Ein-/Ausgabemoduls, einer Funktionskomponente mit wenigstens einem Schieberegister entsprechend der Ein- und/oder Ausgabefunktionalität des Moduls, und einer Busausgangskomponente mit Busausgangsanschluss zur Verbindung mit dem Datenbus. Durch die Aufteilung der einzelnen Module in Komponenten wird die Modularität des erfindungsgemäßen Steuerungssystems weiter erhöht. Je nach gewünschter Funktionalität der einzelnen Module können die Module aus den entsprechenden Funktionskomponenten zusammengestellt werden. Jeweils gleichartige Buseingangs-, Busausgang- und Spannungsversorgungskomponenten können für die verschiedensten Arten von Ein-/Ausgabemodulen benutzt werden. Durch die Verwendung standardisierter Komponenten werden die Herstellungskosten für die Module des erfindungsgemäßen Systems weiter reduziert. In der Praxis hat es sich bewährt, die Komponenten an einer Halteschiene einrastbar auszugestalten. Dabei sind die einzelnen Komponenten entlang der Schiene aufgereiht. Als Halteschienen für die Komponenten des erfindungsgemäßen Steuerungssystems eignen sich besonders gut so genannte Hutschienen (C-Schienen).

Es zeigt sich, dass das erfindungsgemäße Steuerungssystem besonders für die Realisierung von dynamischen Leuchtanzeigen, beispielsweise für Reklamezwecke, geeignet ist. Eine derartige Leuchtanzeige kann aus Ausgabemodulen bestehen, die jeweils mit einer Mehrzahl von einzeln ansteuerbaren, matrixförmig angeordneten Leuchtmitteln ausgestattet sind. Die Leuchtmittel sind dabei voneinander beabstandet auf einem gitterförmigen Träger mit vertikalen und/oder horizontalen Streben angeordnet. Die Leuchtmittel des erfindungsgemäßen Ausgabemoduls bilden somit eine großflächige Matrixanzeige aus. Damit die Darstellung der Matrixanzeige auch aus größerer Entfernung noch gut wahrnehmbar ist, sind die Leuchtmittel voneinander beabstandet angeordnet. Ein gitterförmiger Träger für die Leuchtmittel mit vertikalen und/oder horizontalen Streben ist besonders vorteilhaft, da dieser eine Durchsicht durch den Träger hindurch ermöglicht. Somit kann das Ausgabemodul beispielsweise in einem Fenster angeordnet werden, ohne den Lichteinfall durch das Fenster zu behindern. Außerdem ist die Sicht aus dem Fenster durch das Ausgabemodul nicht behindert, selbst wenn die Größe der Leuchtanzeige mit der Größe des Fensters vergleichbar ist. Der gitterförmige Träger hat weiterhin den Vorteil, dass das erfindungsgemäße Ausgabemodul ein sehr geringes Gewicht hat. Aufgrund des geringen Gewichtes kann das Anzeigemodul mit minimalem Aufwand nahezu überall montiert werden.

Aus einer Mehrzahl der erfindungsgemäßen Ausgabemodule kann mit Vorteil eine großflächige Leuchtanzeige aufgebaut werden, die zur dynamischen Anzeige von Texten und Graphiken verwendbar ist. Mit dem speziellen Datenbus des erfindungsgemäßen Steuerungssystems können die einzelnen Ausgabemodule in Serie miteinander verbunden werden. Dabei ist ein Vorteil, dass der Abstand zwischen den einzelnen Modulen nahezu beliebig (von wenigen cm bis zu 100 m) gewählt werden kann. Die zentrale Prozessoreinheit zur Ansteuerung der Leuchtanzeige kann sich in entsprechender Weise in nahezu beliebigem Abstand von den Ausgabemodulen befinden.

Es hat sich herausgestellt, dass bei dem erfindungsgemäßen Ausgabemodul ein Abstand zwischen den Streben von wenigstens 4 cm, vorzugsweise wenigstens 8 cm sinnvoll ist. Bei Verwendung von ausreichend hellen Leuchtmitteln können die mittels des Ausgabemoduls dargestellten Ziffern, Symbole oder Graphiken noch aus einer Entfernung von mehreren 100 m gut wahrgenommen werden.

Entsprechend der oben dargestellten Funktionsweise des erfindungsgemäßen Steuerungssystems werden die Leuchtmittel des Ausgabemoduls mittels taktgesteuerter Schieberegister angesteuert, wobei die Schieberegister mit der Taktleitung und der Datenleitung des Datenbusses verbunden sind.

Als Leuchtmittel können vorteilhafterweise Leuchtdioden verwendet werden, wobei die diskreten Leuchtpixel des Ausgabemoduls jeweils durch drei separat ansteuerbare Leuchtdioden der Farben Rot, Grün und Blau gebildet werden. Die Farbe und die Helligkeit jedes Leuchtpixels werden dann nach Maßgabe der in den Schieberegistern vorliegenden Datenbits gesteuert. Die Helligkeit der einzelnen Leuchtdioden kann durch die zentrale Prozessoreinheit durch entsprechende Steuerung der Einschaltzeit der einzelnen Leuchtdioden vorgegeben werden. Die Helligkeit ergibt sich dann aus dem Verhältnis von Einschaltzeit zu Ausschaltzeit. Um eine flimmerfreie Darstellung mit dem erfindungsgemäßen Ausgabemodul zu erzielen, sollte die Taktfrequenz des Datenbusses so gewählt werden, dass mit einer Wiederholungsfrequenz von wenigstens 50 Hz eine komplette Bilddarstellung erfolgt.

Das erfindungsgemäße Ausgabemodul eignet sich, wie oben erwähnt, besonders zur Anbringung in einem Fenster, beispielsweise in einem Schaufenster. Zweckmäßigerweise weist der Träger des erfindungsgemäßen Ausgabemoduls Saugnäpfe zur Befestigung des Ausgabemoduls an einer glatten Oberfläche, wie beispielsweise einer Fensterscheibe, auf.

Ausführungsbeispiele der Erfindung werden im Folgenden anhand der Zeichnungen erläutert. Es zeigen:
- Fig. 1: Blockdiagramm des erfindungsgemäßen Steuerungssystems;
- Fig. 2: Blockdiagramm eines Ausgabemoduls;
- Fig. 3: Blockdiagramm eines Eingabemoduls;
- Fig. 4: Schaltplan eines Ausgabemoduls;
- Fig. 5: Leuchtanzeige gemäß der Erfindung.

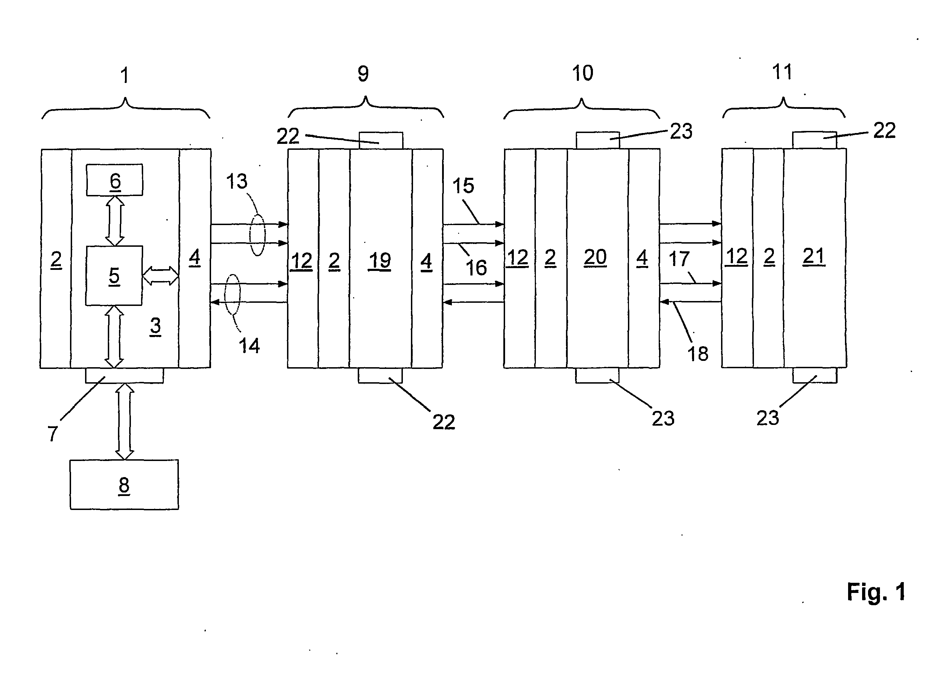

Das in der Figur 1 schematisch gezeigte elektronische Steuerungssystem umfasst eine Prozessoreinheit 1, die aus drei Komponenten besteht. Dies sind eine Spannungsversorgungskomponente 2, eine Funktionskomponente 3 sowie eine Busausgangskomponente 4. Die Funktionskomponente 3 der Prozessoreinheit umfasst einen Mikroprozessor 5 zur Verarbeitung von Programmdaten, die in einem Datenspeicher 6 gespeichert sind. Außerdem weist die Prozessoreinheit 1 eine Datenschnittstelle 7 in Form einer üblichen seriellen Schnittstelle zu einem PC 8 auf. Der PC 8 ist über die Schnittstelle 7 mittels eines Schnittstellenkabels verbindbar. Weiterhin umfasst das in der Figur 1 dargestellte Steuerungssystem ein Eingabemodul 9, ein Ausgabemodul 10 sowie ein kombiniertes Ein-/Ausgabemodul 11. Jedes der Module 9, 10 und 11 besteht aus separaten, über in der Figur 1 nicht näher dargestellte Steckverbindungen miteinander verbindbaren Komponenten, nämlich jeweils aus einer Buseingangskomponente 12 und einer Spannungsversorgungskomponente 2 zur Spannungsversorgung des jeweiligen Moduls. Das Eingabemodul 9 und das Ausgabemodul 10 weisen zudem noch eine Busausgangskomponente 4 auf. Diese wird von dem Ein-/Ausgabemodul 11 nicht benötigt. Die mit gleichen Bezugsziffern bezeichneten Komponenten 2, 4 und 12 sind baugleich und untereinander austauschbar. Die Prozessoreinheit 1 ist über einen digitalen Datenbus mit den Modulen 9, 10 und 11 verbunden. Dieser Datenbus umfasst einen Ausgabekanal 13 und einen Eingabekanal 14. Dabei besteht der Ausgabekanal 13 aus einer Ausgabetaktleitung 15 und einer Ausgabedatenleitung 16. Eine Eingabetaktleitung 17 und eine Eingabedatenleitung 18 bilden den Eingabekanal 14. Die Prozessoreinheit 1 erzeugt auf der Ausgabetaktleitung 15 und auf der Eingabetaktleitung 17 ein Ausgabe- bzw. ein Eingabetaktsignal. Entsprechend ihrer jeweiligen Funktion weisen die Module 9, 10 und 11 unterschiedliche Funktionskomponenten 19, 20 und 21 auf. Das Funktionsmodul 19 des Eingabemoduls 9 ist mit Eingangsanschlüssen 22 zur Erfassung von elektrischen Prozesssignalen ausgestattet. Das Ausgabemodul 10 weist Ausgangsklemmen 23 zur Erzeugung von elektrischen Prozesssignalen auf. Die Funktionskomponente 21 des Ein-/Ausgabemoduls 11 ist sowohl zur Erfassung als auch zur Erzeugung von elektrischen Prozesssignalen ausgebildet. Dementsprechend weist die Funktionskomponente 21 Eingangsanschlüsse 22 und Ausgangsklemmen 23 auf. Der aus dem Ausgabekanal 13 und dem Eingabekanal 14 bestehende Datenbus des in der Figur 1 dargestellten Systems ist zur seriellen Übertragung von Eingabedaten bzw. Ausgabedaten über die Datenleitungen 18 bzw. 16 ausgelegt. Dabei weist jedes der Module 9, 10 und 11 ein oder mehrere ein- oder mehrstufige Schieberegister auf, deren Datenaus- und/oder Eingänge mit den entsprechenden Datenleitungen 16 bzw. 18 des Datenbusses verbunden sind. Das lediglich eine Eingabefunktionalität aufweisende Eingabemodul 9 benötigt entsprechend keine Schieberegister im Ausgabekanal 13. Der Ausgabekanal 13 ist daher durch das Modul 9 einfach durchgeschleift. Entsprechendes gilt für den Eingabekanal bei dem ausschließlich zur Erzeugung von Prozesssignalen vorgesehenen Ausgabemodul 10. Das Ein-/Ausgabemodul 11 umfasst entsprechend seiner Funktion Schieberegister, die dem Ausgabekanal 13 zugeordnet sind, und davon separate Schieberegister, die dem Eingabekanal 14 zugeordnet sind.

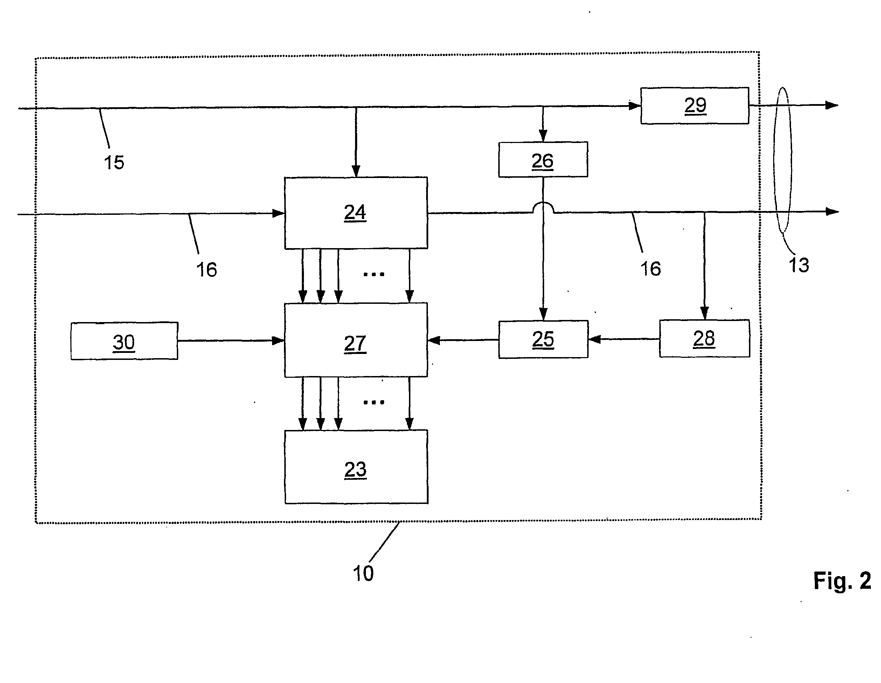

Das Blockdiagramm gemäß Figur 2 veranschaulicht die Funktion des Ausgabemoduls 10 des erfindungsgemäßen elektronischen Steuerungssystems. Die Ausgabedatenleitung 16 ist mit dem Dateneingang eines Schieberegisters 24 verbunden. Das Schieberegister 24 wird dabei von dem Ausgabetaktsignal über die Ausgabetaktleitung 15 gesteuert. Dementsprechend werden die am Dateneingang anliegenden digitalen Signale mit jedem Takt des Ausgabetaktsignals durch das Schieberegister 24 zu dessen Datenausgang in Pfeilrichtung hindurch geschoben. Der Datenausgang des Schieberegisters 24 ist wiederum mit der Ausgabedatenleitung 16 verbunden, so dass die Ausgabedaten an die über den Datenbus in Serie nachgeschalteten Ein- oder Ausgabemodule weiter übertragen werden. Das in der Figur 2 dargestellte Modul 10 weist eine Taktdetektionsschaltung 25 auf, die über ein zwischengeschaltetes Filterelement 26 mit der Ausgabetaktleitung 15 verbunden ist. Das Filterelement 26 dient zur Filterung des Taktsignals, um Funktionsstörungen durch Signalfehler zu vermeiden. Die Taktdetektionsschaltung 25 ist derart ausgebildet, dass diese eine Unterbrechung des auf der Ausgabetaktleitung 15 anliegenden Taktsignals für die Dauer eines vorbestimmten Zeitintervalls registriert und bei einer solchen Unterbrechung die Übernahme der Daten aus dem Schieberegister 24 in einen Datenspeicher 27 des Moduls steuert. Entsprechend den in dem Datenspeicher 27 gespeicherten digitalen Daten werden dann die Signale an dem Ausgangsanschluss 23 des Moduls gesteuert. Die Taktdetektionsschaltung 25 dient somit dazu, jeweils das Ende eines Datenübertragungszyklus anhand der Unterbrechung des Taktsignals zu erkennen, um die zu diesem Zeitpunkt in dem Schieberegister 24 befindlichen Daten in den Speicher 27 zu laden. Danach kann der nächste Datenübertragungszyklus beginnen, wobei kontinuierlich die über die Datenleitung 16 übertragenen Digitalsignale durch das Schieberegister 24 in dem Diagramm gemäß Figur 2 von links nach rechts hindurch geschoben werden, und zwar so lange, bis wiederum der nächste Datenübertragungszyklus beendet ist und sich die nächsten für das Modul 10 bestimmten Daten in dem Schieberegister 24 befinden und erneut in den Speicher 27 übernommen werden können. Das in der Figur 2 dargestellte Modul umfasst weiterhin eine Prüflogikschaltung 28, durch welche die Übertragung von Daten aus dem Schieberegister 24 in den Speicher 27 des Ausgabemoduls 10 in Abhängigkeit vom Ergebnis eines Vergleichs mit vorgegebenen Prüfdaten erfolgt. Diese Prüfdaten können fest in der Prüflogikschaltung 28 gespeichert sein. Des Weiteren ist zwischen den Buseingangsanschluss und den Busausgangsanschluss des Ausgabemoduls 10 eine Taktaufbereitungsschaltung 29 geschaltet, durch welche die Signalform des auf der Taktleitung 15 liegenden Ausgabetaktsignals wieder hergestellt wird. Schließlich ist noch eine Resetschaltung 30 vorgesehen, die beim Einschalten des Moduls 10 für einen vorbestimmten Zustand des Datenspeichers 27 sorgt.

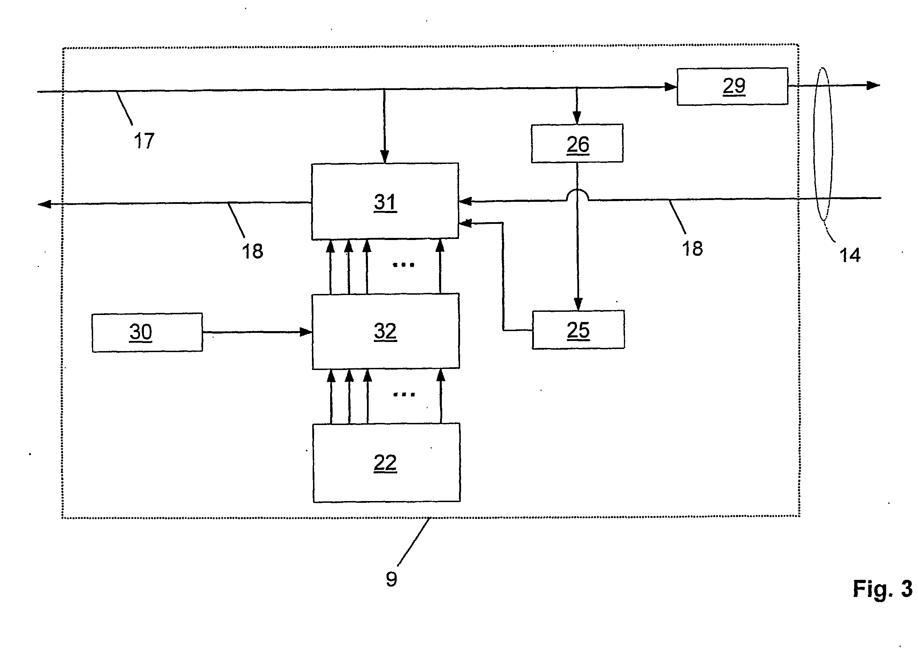

Die Figur 3 zeigt den Aufbau des Eingabemoduls 9, das in der Figur 1 dargestellt ist. Auch das Eingabemodul 9 weist ein Schieberegister 31 auf, das über seine Datenein- und -ausgänge mit der Eingabedatenleitung 18 verbunden ist. Das Schieberegister 31 wird von dem auf der Eingabetaktleitung 17 liegenden Taktsignal gesteuert. Die an den Eingangsanschlüssen 22 des Moduls 9 anliegenden Signale werden in einem Datenspeicher 32 zwischengespeichert. Zur Definition des Grundzustands des Moduls 9 dient wiederum die Resetschaltung 30. Die Übernahme der in dem Speicher 32 gespeicherten digitalen Daten in das Schieberegister wird wiederum von der Taktdetektionsschaltung 25 des Moduls 9 gesteuert. Jeweils nach dem Ende eines Übertragungszyklus, der durch die Unterbrechung des Eingabetaktsignals angezeigt wird, erfolgt die Datenübernahme aus dem Speicher 32 in das Schieberegister 31, so dass während des nachfolgenden Übertragungszyklus die Eingabedaten an die Prozessoreinheit 1 übertragen werden können.

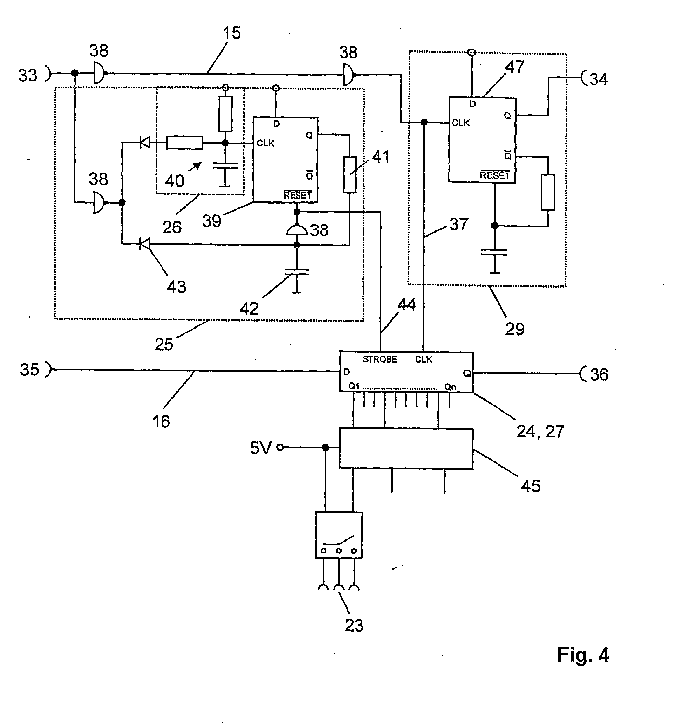

Die Figur 4 zeigt beispielhaft eine Schaltskizze eines Ausgabemoduls des elektronischen Steuerungssystems gemäß der Erfindung. Ein Eingangsanschluss 33 und ein Ausgangsanschluss 34 dienen zur Verbindung des Moduls mit der Ausgabetaktleitung 15 des Systems. Entsprechend dienen ein Eingangsanschluss 35 und ein Ausgangsanschluss 36 zur Verbindung mit der Ausgabedatenleitung 16. Der Anschluss 35 ist mit dem Dateneingang des Schieberegisters 24 verbunden. Über den Ausgangsanschluss 36 werden die am Datenausgang des Schieberegisters 24 anliegenden Daten an in Serie nachgeschaltete Module weitergegeben. Über eine Leitung 37 wird dem Takteingang des Schieberegisters 24 das Ausgabetaktsignal zugeführt. Zwei vorgeschaltete Schmitt-Trigger 38 dienen zur Aufbereitung des Taktsignals. Die Taktdetektionsschaltung 25 des in der Figur 4 dargestellten Moduls umfasst ein Flip-Flop 39, dessen Takteingang mit dem Ausgabetaktsignal über das zwischengeschaltete Filterelement 26 beaufschlagt wird. Das Filterelement 26 besteht im Wesentlichen aus einem RC-Glied 40. Solange Taktsignale anliegen, ist dementsprechend der Q-Ausgang des Flip-Flops 39 aktiv, so dass über einen Widerstand 41 ein Kondensator 42 geladen wird. Während des periodischen Taktsignals wird der Kondensator 42 über eine Diode 43 wiederum kontinuierlich entladen. Bei einer Unterbrechung des Taktsignals wird der Kondensator 42 jedoch auf einen Pegel geladen, der einer logischen "1" entspricht. Dies führt dazu, dass das Flip-Flop 39 zurückgesetzt wird. Über eine Leitung 44 wird das entsprechende Reset-Signal dem STROBE-Eingang des Schieberegisters 24 zugeführt, so dass an den Ausgängen Q1 bis Qn die in dem Schieberegister 24 zu diesem Zeitpunkt vorhandenen Digitaldaten ausgegeben werden. Somit erfüllt das Schieberegister 24 bei dem in der Figur 4 gezeigten Ausführungsbeispiel gleichzeitig die Funktion des Speichers 27 gemäß Figur 2. Die Taktdetektionsschaltung 25 detektiert also die Unterbrechung des Ausgabetaktsignals, durch welche das Ende eines Datenübertragungszyklus angezeigt wird. Die nötige Dauer der Unterbrechung des Taktsignals wird dabei durch die Zeitkonstante bestimmt, die sich aus den Werten des Widerstands 41 und des Kondensators 42 ergibt. Die an den Ausgängen Q1 bis Qn anliegenden Signale steuern eine Treiberschaltung 45. Die Treiberschaltung 45 dient wiederum dazu, ein Schaltrelais 46 zu betätigen. Die Anschlussklemmen des Schaltrelais 46 bilden die Ausgangsanschlüsse 23 des in der Figur 4 dargestellten Moduls. Die Taktaufbereitungsschaltung 29 umfasst ein Flip-Flop 47, dessen Takteingang mit dem Ausgabetaktsignal beaufschlagt wird. Über den Q-Ausgang des Flip-Flops 47 wird das Ausgabetaktsignal an den Ausgangsanschluss 34 und damit an in Serie nachgeschaltete Module weitergegeben. Über ein RC-Glied ist der invertierte Q-Ausgang des Flip-Flops 47 auf dessen Reset-Eingang zurückgekoppelt. Das RC-Glied des Flip-Flops 47 definiert somit die Impulslänge der Taktimpulse des über den Anschluss 34 ausgegebenen Taktsignals. Auf diese Weise ist sichergestellt, dass die Signalimpulse des Taktsignals stets die gewünschte Dauer haben.

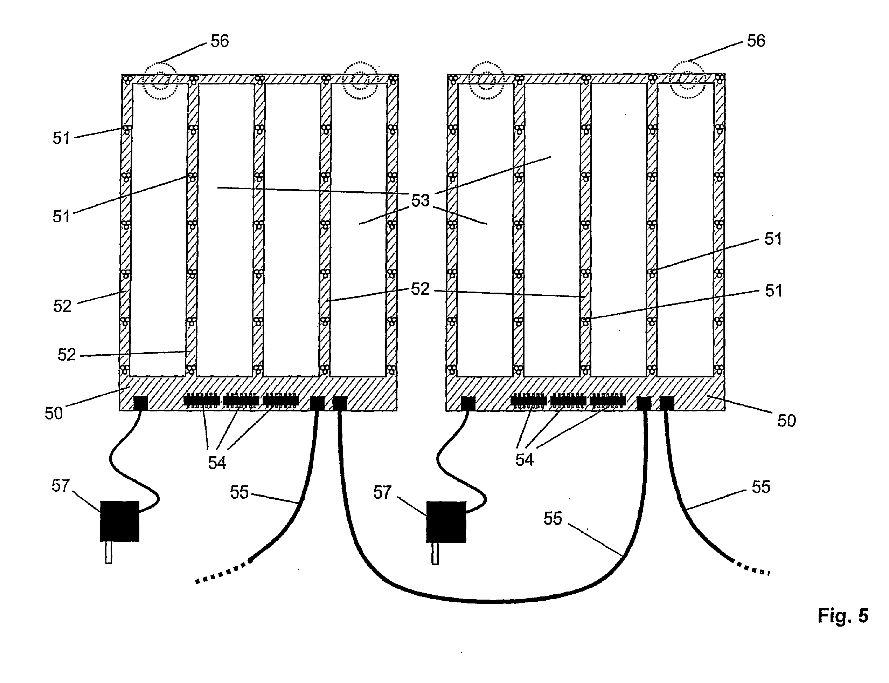

Die Figur 5 zeigt schematisch zwei Anzeigemodule 50, die als Ausgabemodule für das erfindungsgemäße Steuerungssystem einsetzbar sind. Die Anzeigemodule weisen eine Mehrzahl von einzeln ansteuerbaren, matrixförmig angeordneten Leuchtmitteln 51 auf. Bei den Leuchtmitteln 51 handelt es sich um Leuchtdioden, wobei jedes diskrete Leuchtpixel der Ausgabemodule 50 durch drei separat ansteuerbare Leuchtdioden der Farben Rot, Grün und Blau gebildet wird. In der Figur 5 sind die drei unmittelbar nebeneinander angeordneten Leuchtdioden jedes Leuchtpixels deutlich zu erkennen. Die Leuchtmittel 51 sind voneinander beabstandet jeweils auf einem gitterförmigen Träger 52 der Anzeigemodule 50 angeordnet. Dabei weist der gitterförmige Träger 52 vertikale Streben auf, zwischen denen jeweils ein Freiraum 53 von wenigstens 5 cm besteht. Die Leuchtmittel 51 werden mittels taktgesteuerter Schieberegister 54, die ebenfalls auf dem Träger 50 angeordnet sind, angesteuert. Dabei bestimmen die in den Schieberegistern gespeicherten Daten jeweils individuell für jedes Leuchtpixel der Anzeigemodule 50 die Leuchtfarbe und die Helligkeit. Wie in der Figur 5 zu erkennen ist, sind die Module 50 über Kabel 55 in Serie miteinander verbunden. Eine beliebige Anzahl von Anzeigemodulen kann in der dargestellten Weise miteinander verbunden werden, so dass die einzelnen Module zu einer Gesamtanzeige kombiniert werden können. Gesteuert wird die Anzeige insgesamt von einer ebenfalls über die Kabelverbindung 55 angeschlossenen zentralen Prozessoreinheit. Bei den Kabeln 55 kann es sich um herkömmliche Netzwerkkabel, beispielsweise um so genannte RJ45-Kabel handeln. Dabei ist der Takt- und der Datenleitung des Datenbusses, mit denen die Schieberegister 54 verbunden sind, jeweils ein verdrilltes Adernpaar der Kabelverbindung 55 zugeordnet. Bei den Trägern 50 der dargestellten Module handelt es sich um übliche Leiterplatten, mit denen die Leuchtdioden 51 und die elektronischen Bauelemente 54 in herkömmlicher Weise verlötet sind. Die gitterförmige Gestaltung der Träger 50 macht die Anzeigemodule insgesamt durchsichtig, so dass diese sich besonders gut zur Anbringung an einer Fensterscheibe eignen. Zur Befestigung sind entsprechend Saugnäpfe 56 vorgesehen. Die Stromversorgung der elektronischen Komponenten 54 und der Leuchtmittel 51 der Anzeigemodule erfolgt über handelsübliche Steckernetzteile 57. Bei der Verwendung von Leuchtdioden als Leuchtmittel 51 reichen Steckernetzteile mit wenigen Watt Leistung aus, um eine ausreichende Helligkeit der Anzeige zu erreichen, damit diese noch aus mehreren hundert Meter Entfernung gut wahrnehmbar ist.

## Patentansprüche

1. Elektronisches Steuerungssystem, insbesondere für die Automatisierungstechnik, mit einer Prozessoreinheit (1) zur Verarbeitung von gespeicherten Programmdaten, und wenigstens einem von der Prozessoreinheit separaten Ein-/Ausgabemodul (9, 10, 11) zur Erfassung bzw. zur Erzeugung von elektrischen Prozesssignalen, wobei die Prozessoreinheit(1) über einen digitalen Datenbus (13, 14) mit dem Ein-/Ausgabemodul (9, 10, 11) verbunden ist, **dadurch gekennzeichnet, dass** der Datenbus (13, 14) zwei separate Taktleitungen (15, 17), nämlich eine Eingabetaktleitung (17) und eine Ausgabetaktleitung (15), sowie zwei separate Datenleitungen (16, 18), nämlich eine Eingabedatenleitung (18) und eine Ausgabedatenleitung (16), umfasst, wobei das Ein-/Ausgabemodul(9, 10, 11) ein von den Taktsignalen gesteuertes Schieberegister (24, 31) aufweist, dessen Datenausgang und/oder -eingang mit den Datenleitungen (16, 18) verbunden ist.

2. Steuerungssystem nach Anspruch 1, **dadurch gekennzeichnet, dass** die Prozessoreinheit (1) zur Erzeugung eines Ausgabetaktsignals auf der Ausgabetaktleitung (15) und eines Eingabetaktsignals auf der Eingabetaktleitung (17) eingerichtet ist.

3. Steuerungssystem nach Anspruch 1 oder 2, **dadurch gekennzeichnet, dass** die Prozessoreinheit (1) eine Datenschnittstelle (7) zur Verbindung mit einem Computer (8) aufweist.

4. Steuerungssystem nach einem der Ansprüche 1 bis 3, **dadurch gekennzeichnet, dass** der Datenbus (13, 14) als Kabelverbindung (55) ausgebildet ist, wobei jeder Takt- (15, 17) und Datenleitung (16, 18) jeweils ein verdrilltes Adernpaar der Kabelverbindung (55) zugeordnet ist.

5. Steuerungssystem nach einem der Ansprüche 1 bis 4, **gekennzeichnet durch** ein Ein-/Ausgabemodul (9, 10, 11) mit zwei oder mehr Schieberegistern (24, 31), wobei die Schieberegister (24, 31) über ihre Datenein- bzw. -ausgänge in Serie miteinander verbunden sind.

6. Steuerungssystem nach einem der Ansprüche 1 bis 5, **dadurch gekennzeichnet, dass** das Ein-/Ausgabemodul (9, 10, 11) einen Buseingangsanschluss (33, 35) und einen Busausgangsanschluss (34, 36) umfasst, und zwar derart, dass eine Mehrzahl von Ein-/Ausgabemodulen (9, 10, 11) über den Datenbus (13, 14) in Serie miteinander verbindbar sind.

7. Steuerungssystem nach Anspruch 6, **dadurch gekennzeichnet, dass** die Schieberegister (24, 31) der Ein-/Ausgabemodule (9, 10, 11) über die Datenleitung (16, 18) des Datenbusses (13, 14) in Serie miteinander verbindbar sind.

8. Steuerungssystem nach Anspruch 6 oder 7, **dadurch gekennzeichnet, dass** das Ein-/ Ausgabemodul (9, 10, 11) eine zwischen den Buseingangsanschluss (33) und den Busausgangsanschluss (34) geschaltete Taktaufbereitungsschaltung (29) zur Wiederherstellung der Signalform des Taktsignals aufweist.

9. Steuerungssystem nach einem der Ansprüche 1 bis 8, **dadurch gekennzeichnet, dass** das Ein-/Ausgabemodul (9, 10, 11) eine Taktdetektionsschaltung (25) aufweist, die derart ausgebildet ist, dass im Falle einer Unterbrechung des Taktsignals für die Dauer eines vorgebbaren Zeitintervalls entweder die digitalen Daten aus dem Schieberegister (24) in einen Speicher (27) des Ein-/Ausgabemoduls (9, 10, 11) geladen oder die Daten aus dem Speicher (32) in das Schieberegister (31) übertragen werden.

10. Steuerungssystem nach Anspruch 9, **gekennzeichnet durch** eine Prüflogikschaltung (28), **durch** welche die Übertragung von Daten aus dem Schieberegister (24) in den Speicher (27) des Ein-/Ausgabemoduls (9, 10, 11) in Abhängigkeit vom Ergebnis eines Vergleichs mit vorgegebenen Prüfdaten erfolgt.

11. Steuerungssystem nach einem der Ansprüche 1 bis 10, **dadurch gekennzeichnet, dass** die Prozessoreinheit (1) derart eingerichtet ist, dass diese Eingabedaten von Eingabemodulen (9, 11) über den Datenbus (14) periodisch abfragt, wobei die Eingabedaten eines Eingabemoduls (9, 11) erst als gültig erkannt werden, wenn sich diese während einer vorgebbaren Zahl von Abfragezyklen nicht ändern.

12. Steuerungssystem nach einem der Ansprüche 1 bis 11, **dadurch gekennzeichnet, dass** die Prozessoreinheit (1) derart eingerichtet ist, dass diese Ausgabedaten an Ausgabemodule (10, 11) über den Datenbus (13) periodisch mit einer vorgegebenen Wiederholungsfrequenz überträgt, auch wenn sich die Ausgabedaten zwischen den Ausgabezyklen nicht ändern.

13. Steuerungssystem nach einem der Ansprüche 1 bis 12, **dadurch gekennzeichnet, dass** wenigstens ein Ein-/Ausgabemodul(9, 10, 11) aus separaten, über Steckverbindungen miteinander verbindbaren Komponenten besteht, nämlich zumindest aus einer Buseingangskomponente (12) mit Buseingangsanschluss zur Verbindung mit dem Datenbus (13, 14), einer Spannungsversorgungskomponente (2) zur Spannungsversorgung des Ein-/Ausgabemoduls(9, 10, 11), einer Funktionskomponente(19, 20, 21) mit wenigstens einem Schieberegister (24, 31) entsprechend der Ein- und/oder Ausgabefunktionalität des Moduls (9, 10, 11), und einer Busausgangskomponente (4) mit Busausgangsanschluss zur Verbindung mit dem Datenbus (13, 14).

14. Steuerungssystem nach Anspruch 13, **dadurch gekennzeichnet, dass** die Komponenten (2, 4, 12, 19, 20, 21) an einer Halteschiene einrastbar sind.

## Claims

1. An electronic control system, in particular for automation technology, comprising a processor unit (1) for processing stored program data and at least one input/output module (9, 10, 11) separate from the processor unit for acquiring or generating electrical process signals, wherein the processor unit (1) is connected to the input/output module (9, 10, 11) by way of a digital data bus (13, 14), **characterised in that** the data bus (13, 14) has two separate clock lines (15, 17), namely an input clock line (17) and an output clock line (15), and two separate data lines (16, 18), namely an input data line (18) and an output data line (16), wherein the input/output module (9, 10, 11) has a shift register (24, 31) which is controlled by the clock signals and whose data output and/or input is connected to the data lines (16, 18).

2. A control system according to claim 1 **characterised in that** the processor unit (1) is adapted to generate an output clock signal on the output clock line (15) and an input signal on the input clock line (17).

3. A control system according to claim 1 or claim 2 **characterised in that** the processor unit (1) has a data interface (7) for connection to a computer (8).

4. A control system according to one of claims 1 to 3 **characterised in that** the data bus is in the form of a cable connection (55), wherein associated with each clock line (15, 17) and data line (16, 18) is a respective twisted pair of wires of the cable connection (55).

5. A control system according to one of claims 1 to 4 **characterised by** an input/output module (9, 10, 11) having two or more shift registers (24, 31), the shift registers (24, 31) being connected together in series by way of their data inputs and outputs.

6. A control system according to one of claims 1 to 5 **characterised in that** the input/output module (9, 10, 11) includes a bus input connection (33, 35) and a bus output connection (34, 36), more specifically in such a way that a plurality of input/output modules (9, 10, 11) are connected together in series by way of the data bus (13, 14).

7. A control system according to claim 6 **characterised in that** the shift registers (24, 31) of the input/output modules (9, 10, 11) can be connected together in series by way of the data line (16, 18) of the data bus (13, 14).

8. A control system according to claim 6 or claim 7 **characterised in that** the input/output module (9, 10, 11) has a clock preparation circuit (29) connected between the bus input connection (33) and the bus output connection (34) for restoring the signal form of the clock signal.

9. A control system according to one of claims 1 to 8 **characterised in that** the input/output module (9, 10, 11) has a clock detection unit (25) which is so adapted that in the case of an interruption in the clock signal for the duration of a predetermined period of time either the digital data from the shift register (24) are loaded into a memory (27) of the input/output module (9, 10, 11) or the data are transferred from the memory (32) into the shift register (31).

10. A control system according to claim 9 **characterised by** a check logic circuit (28) by which the transfer of data out of the shift register (24) into the memory (27) of the input/output module (9, 10, 11) is effected in dependence on the result of a comparison with predetermined check data.

11. A control system according to one of claims 1 to 10 **characterised in that** the processor unit (1) is so adapted that it periodically queries input data from input modules (9, 11) by way of the data bus (14), wherein the input data of an input module (9, 11) are recognised as valid only if they do not change during a predetermined number of enquiry cycles.

12. A control system according to one of claims 1 to 11 **characterised in that** the processor unit (1) is so adapted that it periodically transfers output data to output modules (10, 11) by way of the data bus (13) at a predetermined repetition rate even if the output data do not alter between the output cycles.

13. A control system according to one of claims 1 to 12 **characterised in that** at least one input/output module (9, 10, 11) comprises separate components which can be connected together by way of plug connections, namely at least a bus input component (12) with a bus input connection for connection to the data bus (13, 14), a voltage supply component (2) for voltage supply for the input/output module (9, 10, 11), a function component (19, 20, 21) with at least one shift register (24, 31) corresponding to the input and/or output functionality of the module (9, 10, 11), and a bus output component (4) with a bus output connection for connection to the data bus (13, 14).

14. A control system according to claim 13 **characterised in that** the components (2, 4, 12, 19, 20, 21) are latchable to a holding rail.

## Revendications

1. Système de commande électronique, en particulier pour la technique d'automatisation, comportant un processeur (1) pour le traitement des données du programme stockées en mémoire, et au moins un module d'entrée et de sortie (9, 10, 11), séparé du processeur et destiné à enregistrer ou à délivrer des signaux électriques du processus, ledit processeur (1) étant relié au module d'entrée et de sortie (9, 10, 11) via un bus de données (13, 14) numérique, **caractérisé en ce que** le bus de données (13, 14) comporte deux lignes de synchronisation (15, 17) séparées, à savoir une ligne de synchronisation d'entrée (17) et une ligne de synchronisation de sortie (15), ainsi que deux lignes de transmission de données (16, 18) séparées, à savoir une ligne de transmission des données d'entrée (18) et une ligne de transmission des données de sortie (16), ledit module d'entrée et de sortie (9, 10, 11) comportant un registre à décalage (24, 31), qui est commandé par les signaux de synchronisation et dont la sortie de données et/ou l'entrée de données est reliée aux lignes de transmission de données (16, 18).

2. Système de commande selon la revendication 1,
**caractérisé en ce que** le processeur (1) est configuré pour délivrer un signal de synchronisation de sortie sur la ligne de synchronisation de sortie (15) et un signal de synchronisation d'entrée sur la ligne de synchronisation d'entrée (17).

3. Système de commande selon la revendication 1 ou 2, **caractérisé en ce que** le processeur (1) comporte une interface de données (7) pour le raccordement à un ordinateur (8).

4. Système de commande selon l'une quelconque des revendications 1 à 3, **caractérisé en ce que** le bus de données (13, 14) est réalisé sous la forme d'un câble de liaison (55), sachant qu'à chaque ligne de synchronisation (15, 17) et ligne de transmission de données (16, 18) est associée une paire de conducteurs torsadés du câble de liaison (55).

5. Système de commande selon l'une quelconque des revendications 1 à 4, **caractérisé par** un module d'entrée et de sortie (9, 10, 11) avec deux ou davantage de registres à décalage (24, 31), lesdits registres à décalage (24, 31) étant reliés entre eux en série via leurs entrées et sorties de données.

6. Système de commande selon l'une quelconque des revendications 1 à 5, **caractérisé en ce que** le module d'entrée et de sortie (9, 10, 11) comporte un raccord d'entrée de bus (33, 35) et un raccord de sortie de bus (34, 36), à savoir de telle sorte qu'une pluralité de modules d'entrée et de sortie (9, 10, 11) peuvent être reliés entre eux en série via le bus de données (13, 14).

7. Système de commande selon la revendication 6,
**caractérisé en ce que** les registres à décalage (24, 31) des modules d'entrée et de sortie (9, 10, 11) peuvent être reliés entre eux en série via la ligne de transmission des données (16, 18) du bus de données (13, 14).

8. Système de commande selon la revendication 6 ou 7, **caractérisé en ce que** le module d'entrée et de sortie (9, 10, 11) comporte un circuit de préparation de synchronisation (29), monté entre le raccord d'entrée de bus (33) et le raccord de sortie de bus (34) et destiné à rétablir la forme du signal de synchronisation.

9. Système de commande selon l'une quelconque des revendications 1 à 8, **caractérisé en ce que** le module d'entrée et de sortie (9, 10, 11) comporte un circuit de détection de synchronisation (25), qui est réalisé de telle sorte que, en cas d'interruption du signal de synchronisation pendant la durée d'un intervalle de temps prédéfinissable, les données numériques sont chargées à partir du registre à décalage (24) dans une mémoire (27) du module d'entrée et de sortie (9, 10, 11) ou les données sont transmises à partir de la mémoire (32) vers le registre à décalage (31).

10. Système de commande selon la revendication 9, **caractérisé par** un circuit logique de contrôle (28), par lequel les données sont transmises à partir du registre à décalage (24) vers la mémoire (27) du module d'entrée et de sortie (9, 10, 11) en fonction du résultat d'une comparaison des données de contrôle prédéfinies.

11. Système de commande selon l'une quelconque des revendications 1 à 10, **caractérisé en ce que** le processeur (1) est configuré de telle sorte qu'il interroge périodiquement des données d'entrée des modules d'entrée (9, 11) via le bus de données (14), lesdites données d'entrée d'un module d'entrée (9, 11) étant réputées valides uniquement lorsqu'elles ne varient pas pendant un nombre prédéfinissable de cycles d'interrogation.

12. Système de commande selon l'une quelconque des revendications 1 à 11, **caractérisé en ce que** le processeur (1) est configuré de telle sorte qu'il transmet périodiquement des données de sortie vers les modules de sortie (10, 11) via le bus de données (13) avec une fréquence de répétition prédéfinie, même lorsque lesdites données de sortie ne varient pas entre les cycles de sortie.

13. Système de commande selon l'une quelconque des revendications 1 à 12, **caractérisé en ce qu'**au moins un module d'entrée et de sortie (9, 10, 11) est formé par des composants séparés, aptes à être reliés entre eux via des connecteurs à fiches, à savoir au moins un composant d'entrée de bus (12) avec un raccord d'entrée de bus pour la liaison avec le bus de données (13, 14), un composant d'alimentation en tension (2) pour alimenter en tension le module d'entrée et de sortie (9, 10, 11), un composant fonctionnel (19, 20, 21) avec au moins un registre à décalage (24, 31) conformément à la fonctionnalité d'entrée et/ou de sortie du module (9, 10, 11) et un composant de sortie de bus (4) avec un raccord de sortie de bus pour la liaison avec le bus de données (13, 14).

14. Système de commande selon la revendication 13, **caractérisé en ce que** les composants (2, 4, 12, 19, 20, 21) peuvent être enclenchés dans un rail de fixation.
